# EUROPEAN PATENT APPLICATION

(11) **EP 0 663 635 A1**
(43) Date of publication of application: **19.07.1995**
(21) Application number: 93120189.1
(22) Date of filing: 15.12.1993
(51) Int. Cl.: G06F 7/02, H04Q 7/16

(54) **Fast serial comparator**

(71) Applicant: FIRMA ERIKA KÖCHLER, CH-8833 Samstagern (CH)
(72) Inventor: Lax, Peter Alexander, Bath BA2 2EE, Avon (GB)
(74) Representative: Blum, Rudolf Emil Ernst

(57) **Abstract**

The comparator consists of eight parallel comparing units, each having a xor- or a xnor-gate (10-17) for comparing incoming data (DATA) to reference values and several error counters (20-27) for counting the differing bits between the input data and each reference value. The reference values and the input data are fed sequentially to each comparing unit. The outputs of the error counters are fed to a logic circuit (1) for analyzing if one of the error counters indicates a correspondence between the input data and a reference value.

Due to its high degree of parallelity, the described comparator is very fast, allows to compare the input data to a large number of reference values and generates only a small amount of electrical noise. Therefore, the comparator is e.g. suited as an address decoder in a portable radio pager.

## Description

The invention relates to a comparator for comparing sequential input data with a set of reference values and to a receiver for digitally coded radio signals with an address decoder comprising such a comparator.

A comparator of this kind can be used to test if a serial incoming data sequence corresponds to one of a set of predefined sequences (values). A good example of systems requiring such a comparator are digital radio receivers, such as digital, wireless phones or radio pagers. Here, each receiver has a few predetermined addresses that it has to detect in an address portion of the incoming data stream. After the detection of one of these addresses it proceeds to decode the data following the address in a predetermined manner. For this purpose, each bit of the incoming address is compared to the corresponding bits of the predefined addresses and each discrepancy is counted. A large number of differences indicates that there is no match between the incoming and a predefined address. If, at the end of this process, the number of differences between the incoming address and a predefined address if smaller than a given threshold value, it can be assumed that this address was received. The comparison is carried out in a microprocessor as a software process. The number of addresses (sequences) that can be compared depends on the speed of the microprocessor.

On portable equipment with small batteries, the operating speed of the microprocessor should be as low as possible to keep power consumption low. This limits the number of predefined addresses that can compared to the incoming address.

Furthermore the operation of the microprocessor while comparing the data requires a large number of switching processes in its digital circuits and generates considerable electrical noise. Since this noise may disturb an RF receiver, it is desired to keep the microprocessor activity as low possible. This again limits the number of addresses that can be compared to the incoming address.

It is therefore an object of the present invention to provide a possibility to compare serial data with a number of predefined sequences (reference values) that does not have the disadvantages listed above. Especially, the invention should be able to quickly compare the incoming, serial data with a very large number of predefined values while keeping power consumption and electrical noise low.

Now, in order to implement these and still further objects of the invention, which will become more readily apparent as the description proceeds, the invention is manifested by the features listed in the characterizing portion of the independent claims.

By dividing the task of comparing the incoming data between several comparing units, a very large number of reference values can be compared quickly. By feeding the reference values serially to the comparing units, comparison can occur in synchronism with the incoming data. A minimum of switching processes are required. Therefore, power consumption and noise generation are low.

Preferably, each comparing unit comprises a comparator stage (e.g. an xor-gate) for comparing incoming and reference data. The output of this comparator stage is led to a counter stage. The counter stage can e.g. consist of one or more counters that are increased at each discrepancy between input and reference and that generate a "match" signal while the number of discrepancies lies below a given threshold.

Preferably, each comparing unit is used to compare the incoming data with more than one predefined value. This is carried out by consecutively feeding corresponding bits of the predefined values to the comparing unit for each bit of the input data. In this way, the number of logic elements can be decreased considerably. For keeping track of the discrepancies between input and reference data, each comparing unit can be equipped with a sufficient number of counters. The counters are operated in synchronism with the bits of the reference data.

When used as a address decoder in a radio receiver for digitally coded signals, the invention allows a comparison of the incoming address with a large number of predefined addresses. The power consumption and electrical noise generation of such an address decoder lies below that of conventional solutions.

The invention will be better understood and objects other than those set forth above will become apparent when consideration is given to the following detailed description thereof. Such description makes reference to the annexed drawings, wherein:
Figure 1 is a block diagram of an embodiment of the comparator according to the invention;
Figure 2 is a possible circuit diagram for one comparing unit, and
Figure 3 is a timing diagram of the comparing unit of Fig. 2.

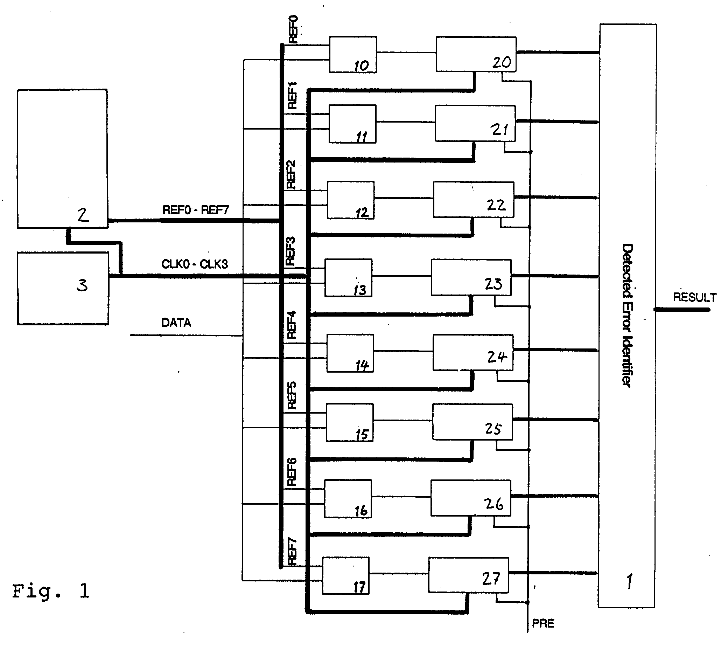

Figure 1 shows a block diagram of a preferred embodiment of the invention. The shown comparator is part of a portable radio pager and used to check if one of the addresses assigned to the pager has been received. In this figure thick lines are used to indicate that the corresponding connection consists of a plurality of individual lines.

The comparator has the following inputs: DATA for the incoming serial address data to be compared to the to the predefined addresses of the pager; REF0 - REF7 for sequentially feeding the pager's predefined addresses to the comparator; CLK0 - CLK3 for synchronizing the error counters of the comparator with the incoming signals; PRE for resetting the comparator. The signals REF0 - REF7 are generated by a reference signal generator 2. The clock signals CLK0 - CLK3 are generated by a clock generator 3. The output RESULT of the comparator indicates if one of the pager's addresses corresponds to the received address and, if yes, which address it is.

The shown embodiment of the comparator comprises eight comparing units and a "Detected Error Identifier" 1 for converting the results generated by the comparing units into the output signal RESULT. Each comparing unit consists of a comparator stage comprising a xor or xnor gate 10-17 and a counter stage with several error counters 20-27.

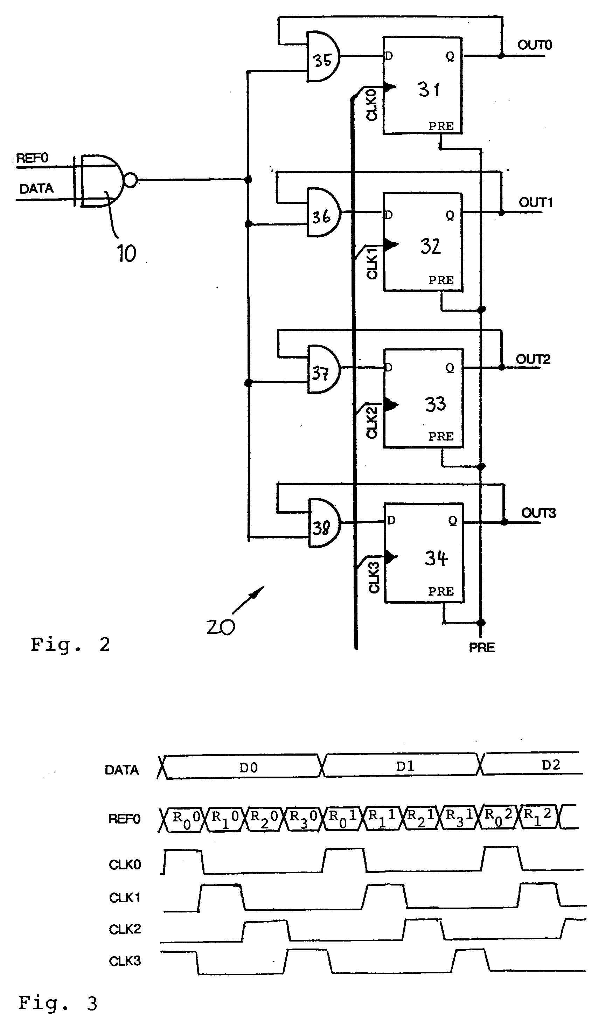

Figure 2 shows a possible embodiment for a single comparing unit. An xnor gate 10 is used to compare the received address data DATA to the signal REF0. The output of the xnor gate is lead to four 1-bit counters consisting of the D-flip-flops 31-34 and the and-gates 35 - 38. The flip-flops are clocked by the negative edges of the clock signals CLK0 - CLK3 and can be preset by input PRE. The timing of CLK0 - CLK3 is such that the flip-flops are clocked before the next reference data is output from the reference signal generator 2. The outputs OUT0 - OUT3 of the counters are fed to the "Detected Error Identifier" 1.

The operation of the comparator can be best understood by referring to the timing diagram of Fig. 3. Before feeding the incoming address data to the comparator, the error counters are preset by applying the signal PRE, thereby setting each output OUT0 - OUT3 of the error counters to 1.

Then, the bits D0, D1, D2, ... of the incoming address data are fed sequentially to the input DATA of the comparator (see Fig. 3). Simultaneously, the bits of the predefined addresses are fed to the input lines REF0 - REF7. The present embodiment is designed to compare 32 predefined addresses R₀ - R₃₁ to the received address. The topmost comparing unit 10, 20 is used to compare R₀ - R₃, the next comparing unit 11, 21 is used to compare R₄ - R₇, etc. To carry out this comparison, bit n of Rᵢ (designated Rᵢn) is fed to its corresponding comparing unit while bit Dn of the address data is applied thereto. Because each comparing unit k must compare four addresses Rᵢ - Rᵢ₊₃ to the address data word D, bits Rᵢn - Rᵢ₊₃n must be applied to input REFk while Dn is present at the input DATA. This is achieved by using CLK0 - CLK3 inputs to reference signal generator 2 and generating the relevant bits Rᵢn - Rᵢ₊₃n with the rising edge of CLK0 - CLK3.

Fig. 3 shows the corresponding timing diagram for the beginning of an address data word and the topmost comparing unit 10, 20 of Fig. 2. While the first bit D0 of the address data word is present at input DATA, the first bits R₀0 - R₃0 of the predefined addresses R₀ - R₃ are applied to input REF0 on the rising edges of CLK0 - CLK3, respectively. On the falling edges of CLK0 - CLK3 the counters 31 - 34 are clocked. When the first bit R₀0 of R₀ has been applied to input REF0, a clock pulse CLK0 is sent to counter 31. The counter 31 will switch its output Out0 from 1 to 0 if D0 is not equal to R₀0. Then, the first bit R₁0 of R₁ is applied to REF0 and compared to D0. Counter 32 is triggered by CLK1 and goes to zero if the two bits are unequal. Then R₂0 and R₃0 are compared to D0 and counters 33 and 34 are set accordingly.

Then, the next bit D1 of the address data word is applied to the input DATA, the next bit R₀1 - R₃1 of R₀ - R₃ is compared to D1 and the counters are set accordingly. Note that once the output of a counter goes to zero it will remain zero until the next preset signal PRE is applied.
give the result of the comparison between the address data D and the predefined values R₀ - R₃. OUTn will only be 1 if the number of different bits between the address data D and Rₙ is zero.

In the shown, preferred embodiment, the outputs of the error counters are fed to the Detected Error Identifier 1. This circuit generates the signal RESULT. This output signal consists of five output lines representing an integer number indicating which of the outputs of all error counters is 1 and an indicator line signalling if at least one of the outputs of all error counters is 1.

The circuit 2 for generating the reference signals REF0 - REF7 and the circuit 3 for generating the clock signals CLK0 - CLK3 can easily be designed by a person skilled in the art. The reference signals can e.g. be stored in a RAM or ROM, the first word of which holds all first bits R₀0, R₄0, R₈0... of the reference values R₄ₙ (where n is an integer number), the second word of which holds all first bits R₁0, R₅0, R₉0... of the reference values R₄ₙ₊₁ etc. The words stored in this RAM or ROM are read out consecutively and fed to REF0 - REF7. other implementations of a means for sequentially feeding the reference values to the comparator are possible known to a person skilled in the art.

The embodiment shown in Figs. 1-3 is designed to compare the incoming data with 32 reference values. This number can be varied in a wide range. For a radio pager, it may be useful to be able to respond to 128 addresses or more. For this purpose, it is e.g. possible to use 16 comparing units, each being provided with 8 error counters. In this case, the bits of eight reference values would have to be fed to each comparing unit during each address data bit.

In order to make the system error-tolerant, the error counters can be designed to count more than one difference before indicating a discrepancy at their output. It is e.g. possible to use 2-bit counters and to assume that the incoming data and a reference value are equal if there are less than two or three differences between their bits. This threshold value can also be made programmable. The threshold value will depend on the length of the sequence to be compared and the reliability of the incoming data. It should be noted that there is no limit to the length of the sequences that can be compared in the present comparator.

It is also possible to provide only one error counter per comparing unit and to use each comparing unit for comparing only one reference value, thereby reducing the number of components and increasing the allowable bit rate of the input data.

The embodiments discussed so far were part of a address decoding device of a radio pager. It is, however, possible to use the invention in various other applications, e.g. in wireless telephones, remote control receivers, in pattern recognition, data synchronization, etc.

While there are shown and described present preferred embodiments of the invention, it is to be distinctly understood that the invention is not limited thereto, but may be otherwise variously embodied and practiced within the scope of the following claims.

## Claims

1. A comparator for comparing sequential in put data (D) with a set of reference values (R₀, R₁, R₃), characterized in that said comparator comprises one or a plurality of comparing units (10, 20; 11, 21; ...), each of said comparing units having a first input (DATA) for said input data and a second input (REF0, REF1, ...), wherein a reference feeding means (2) is provided for sequentially feeding at least one reference value to the second input of each said comparing units.

2. The comparator of claim 1, wherein each comparing unit comprises a comparator stage (10, 11, 12 ...) for binary comparing said first (DATA) and said second (REF0, REF1...) input and a counter stage (20, 21, 22...) for analyzing an output signal of said comparator stage.

3. The comparator of claim 2, wherein said counter stage (20, 21, 22...) is adapted to detect a threshold number of discrepancies between information fed to said first (DATA) and said second (REF0, REF1,...) input.

4. The comparator of any of the preceding claims wherein said reference feeding means (2) is adapted to feed a plurality of reference values (R₀ - R₃) to the second input (REF0) of each comparing unit (10, 20) such that while one bit (Dₙ) of said input data is present on said first input (DATA) the corresponding bits (R₀n - R₃n) of said plurality of reference values are applied sequentially to said second input (REF0).

5. The comparator of claim 2 and 4, wherein each counter stage (20, 21...) comprises a plurality of counter units (31 - 34), each counter unit being provided for counting bit-wise discrepancies between said input data (D) and one of said plurality of reference values (R₀ - R₁).

6. The comparator of any of the preceding claims, wherein output signals (OUT0 - OUT3) from said comparing units are fed to a analyzing stage (1), said analyzing stage being adapted for determining the reference value with a defined correspondence to said input data.

7. A receiver for digitally coded radio signals with a address decoder comprising a comparator of any of the preceding claims.
